# EUROPEAN PATENT SPECIFICATION

(11) **EP 2 433 909 B1**
(45) Date of publication and mention of the grant of the patent: **01.07.2015**
(21) Application number: 11181747.4
(22) Date of filing: 19.09.2011
(51) Int. Cl.: C02F 1/78, B01D 53/66, C01B 13/11

(54) **Device for the disinfection of water using ozone.**
Vorrichtung zur Desinfektion von Wasser unter Verwendung von Ozon.
Système de désinfection de l' eau à l'aide d'ozone.

(30) Priority: 24.09.2010 IT MO20100266
(43) Date of publication of application: 28.03.2012
(73) Proprietor: EVERGREEN TECNO PLANTS S.r.l., 36100 Vicenza (IT)
(72) Inventor: Buccheri, Antonio, 36077 Altavilla Vicentina (VI) (IT)
(74) Representative: Brunacci, Marco

(56) References cited:
- EP-A2- 1 153 890
- WO-A1-91/01944
- WO-A2-03/033402
- US-A1- 2003 132 167
- US-A1- 2004 016 706
- US-A1- 2004 168 989
- US-A1- 2007 090 030
- DATABASE WPI Week 200880 Thomson Scientific, London, GB; AN 2008-N68768 XP002666990, -& CN 101 134 613 A (SHANGHAI LIGHT IND RES INST CO LTD) 5 March 2008 (2008-03-05)

## Description

The present invention relates to an appliance for the treatment of water, particularly for humidification systems in air treatment units, water-sanitary circuits, swimming facilities and the like.

It is known that in buildings the treatment and the conditioning of air is entrusted to specific units called "air treatment units".

The technical and performance specifications of these units have changed over the years along with environmental comfort concepts and aspects and they have seen a gradual evolution together with a rise in the environmental comfort expectations of users and an increase in technical know-how relating to air treatment and conditioning phenomena.

Originally, for example, only two parameters were controlled, considered crucial for achieving the level of comfort, i.e., the temperature and the humidity of the air, whose values have been regulated by a series of regulations depending on the type of environment or on the job to be performed inside this. Subsequently, a new parameter was introduced, consisting of the need to filter the introduced air, and special attention also began to be paid to the type of air diffusion, introducing concepts of wellbeing tied to the speed of the air in the environments, and to aspects associable with this, such as indoor acoustics. Furthermore, during the course of the years, it has become increasingly more important to determine the correct level of environmental humidity and, for this reason, various humidification systems have been developed inside the air treatment units, able to produce steam and ensure the required levels of relative humidity.

Between the Sixties and the Nineties, traditional adiabatic humidification systems were installed in the air treatment units which can be summed up in the following types:
- adiabatic humidification with spray gun and nozzles, with water from an open system;
- adiabatic humidification with spray nozzle ramps, with recirculation pump;
- adiabatic humidification with evaporation device, with water from an open system;
- adiabatic humidification with evaporation device, with recirculation pump.

Only to a lesser extent and in the odd specific application in hospital or industrial processing sectors have humidification systems been used with steam available from centralised system or produced independently on site.

In this respect, it can be estimated that about 90% of currently operating machines installed during the period between the Sixties and the Nineties are equipped with the above-mentioned traditional adiabatic humidification systems.

After the Nineties, adiabatic humidifiers continued to be used, though they were gradually replaced by other steam production systems, which can be summed up in the following types:
- independent heating-element producers;
- immersed-electrode steam producers;
- gas steam producers;
- ultrasonic steam producers;
- atomised-water humidifiers;
- compressed-air humidifiers;
- process-steam steam reboiler;
- humidifiers with porous ceramic walls.

The main reasons for the preference given to other steam production systems compared to traditional ones can be summed up as follows:
- traditional adiabatic systems do not allow modulating the production of steam inasmuch as tending towards an on-off type behaviour not compatible with the needs to perfect humidity control in the premises;
- traditional adiabatic systems are affected by a series of problems tied to water stagnation in the storage tanks which create the ideal conditions for the breeding of bacterial colonies.

It should be borne in mind however that the new humidification systems also have a number of drawbacks, among which the fact that the lack of availability of compressed air and the occurrence of difficult-to-eliminate acoustic problems reduce their application options.

The most critical aspect in both new and traditional humidification systems is in any case represented by the risk of microbiological contamination, which is very high.

To solve this problem, none of the above-mentioned humidification systems is able to provide a complete and exhaustive solution, bearing in mind the fact that the surfaces wetted with the condensed steam are the ideal habitat for bacterial breeding.

The extensiveness of the problem of microbiological contamination in humidification systems is therefore by now ascertained, and the harm done to human health and the illnesses that can be potentially caused by the proliferation of viruses and bacteria in these systems is by now well known.

To reduce the risk of contamination in humidification systems, the following technologies are currently used:
- evaporating devices with anti-bacterial power;
- surface coatings with anti-bacterial characteristics;
- ultra-violet lamp systems;
- cutting-edge systems with ultra-violet LED lamps;
- chemical additives;
- fungicide, bactericide substances, specific anti-legionella substances, etc.

It must however be underlined that all these technologies do not have virucide but only bactericide powers.

It must also be underlined that the technologies which make use of chemical products are often also hazardous in terms of possible environmental pollution. It is also known that similar problems relating to the risk of bacteriological contamination are also present within the water-sanitary systems of buildings, especially hospitals, offices, dwelling houses, industrial environments, surgeries, kitchens, swimming facilities, public premises, small workshops, but also ships and public transport vehicles.

Besides the pollutants conveyed by water (bacteria, viruses, etc.), in water-sanitary systems, the pollutants must also be kept in check produced by the production and environmental processes in which such systems are installed. For these reasons, the choice of a suitable treatment system of water and water-sanitary circuits plays a role of crucial importance.

For this purpose, types of even very different treatment equipment are adopted which, usually, are only effective during the treatment stage of the water entering the system, while they are inadequate for maintaining conditions of microbiological safety.

Very often, these appliances treat the water by forcing it to cross a series of filters, of mechanical type and/or of inverse osmosis type, on which the particles in suspension remain trapped.

Generally, these appliances manage to obtain satisfactory results as long as they are correctly sized, but only when combined with other treatment methods, e.g., water softening.

Another treatment method exploits for example the heat shock produced by the circulation in the water-sanitary circuits of hot water at about 60/70° C for a time of about 1 hour.

Although in some cases, this method is distinguished by a particularly high efficiency of polluting substance treatment/elimination, it does have a number of functional limits.

It must be underlined, for example, that it is nearly always impossible to produce hot water at 60/70°C and at the same time distribute it through all the branches of a water-sanitary circuit for 1 hour without preventing the temperature of the water from dropping considerably.

The reason for this on the one hand is that no thermal unit is every sized with a contemporaneousness factor equal to 100% of all the utilities and, on the other hand, the very great length of the water-sanitary circuits causes very strong heat dispersion.

Besides this, in some cases, the technical impossibility must be considered of opening all the utilities in the water-sanitary circuit at once, as well as the considerable use of energy which makes this method very expensive.

Another system contemplates the treatment of the water-sanitary circuits using large concentrations of chlorine but, in this case, this method is often harmful for all the component parts of the water-sanitary circuits in view of the high reactivity of chlorine, which causes frequent corrosive phenomena.

Such method is also very invasive and harmful for users remaining inside the premises in which the water-sanitary circuits are installed.

Besides this, it should be remembered that the large quantities of chlorine used in these treatment processes are often disposed of directly into the drains without any dechlorination system, with the risk of causing serious damage of an environmental nature.

Recently, other systems have been tested for the treatment of water-sanitary circuits, including, e.g., the use of silver ions, ultra-violet rays and hydrogen peroxide.

None of these systems have managed to completely solve the problem and are very expensive (especially the ultra-violet rays) and/or difficult to use, as in the case of the hydrogen peroxide considering that all the treated water present in the water-sanitary circuits has to be collected up and disposed of as toxic waste. Furthermore, one limit which all these treatment systems have in common is the limited duration of the benefit deriving from the treatment.

Studies and research carried out on the topic have shown that after about 2 or 3 days from the treatment, the microbiological risks return to initial levels.

To this must be added that all the above solutions are usually used only in hot water-sanitary circuits and not in cold water circuits, where in actual fact, above all in the hottest months of the year, temperatures can be reached (e.g., in water pipes running on the outside of buildings) that are already suitable for the breeding of bacteria and viruses (26/28°C).

As regards the water circuits of swimming pools and swimming facilities, furthermore, the situation becomes even more complicated considering that the water is made to re-circulate and is therefore subject to a consequent increase in the concentration of pollutants as this gradually comes into contact with swimming-pool users.

Currently, the treatment of water in these plants has consisted in a closed circuit in which the water re-circulates in on average four hours, passing from the bathing pool to a sand filtration system.

A pumping unit allows correct water circulation.

To maintain the chemical-physical parameters of the water, various systems are used founded mainly on the use of chemical additives.

In this sector as well in fact, chlorine-based equipment is the most commonly used, besides the use of products for controlling the pH of water.

New treatment systems have also been tested in this sector but without however managing to completely overcome the numerous existing problems.

For example, an electrolysis system has been adopted using sodium hypochlorite separated from the salt in a circuit secondary to that of the water treatment, with the result that a concentration of chlorine of around 0.8 ppm in any case remains in the water of the swimming facility.

Another adopted system consists in irradiating the water to be treated with ultra-violet rays produced by UV lamps which, while on the one hand successfully reducing the breeding of bacteria, on the other are ineffective with respect to any viruses.

Such lamps, furthermore, quickly deteriorate and have to be often replaced. To this must be added that even with the use of the UV lamps, keeping the water in the water-sanitary circuit in good condition in any case requires the presence of chlorine in a quantity of around 0.8 ÷ 0.9 ppm.

Finally, for some years, a system has been used in swimming pools which contemplates the use of ozone.

This system, though exploiting the ozone gas which, by its very nature, is a strong oxidiser capable of deactivating viruses and bacteria, is difficult to manage and consists in injecting large concentrations of ozone directly into the swimming-pool treatment filters, with the risk of seriously damaging them considering the corrosive properties of the gas.

For this very reason, all the filters and many other system components have to be replaced with components made from suitable material, with consequent increase in plant production costs.

Furthermore, such systems can also be potentially hazardous because they are unable to perform any control on the action of the ozone and make sure, for certain, that the ozone, which is harmful if inhaled in certain concentrations, does not evaporate inside the swimming facility building.

A particular example of water treatment by means of ozone is shown on the patent document EP 1 153 890, wherein the water to be treated is made to flow through a Venturi tube, into which the ozone is injected, and then conveyed to a contact tower having a breathing valve, to allow the excess ozone to escape. This procedure, however, does not in any way envisage the evaluation of the actual quality of the water, in particular the bacterial load present in it, to manage the quantity of ozone to be produced, and inevitably leads to the need for oversize and cumbersome ozone production systems which have very high installation and energy consumption costs and produce excessive quantities of ozone which deteriorate the system components.

Another water treatment system is shown on the document US 2004/0016706. Similarly to the patent EP 1 153 890, however, the document US 2004/0016706 does not contemplate any type of water quality control, in particular of the bacterial load present in it, after it has been treated with the ozone.

In this respect therefore, the patent US 2004/0016706 has the same drawbacks as patent EP1 153 890.

The patent documents US 2007/0090030 and US 2004/0168989 show other systems for treating water by using ozone, in particular drinking water.

These documents contemplate the use of devices suitable for measuring the oxidation-reduction potential (ORP) of the treated water, for the purpose of determining its quality.

Such datum relating to the quality of the water is used to switch an ozone generator on and off according to need.

In conditions of low water quality, the ozone generator is switched on and produces large concentrations of ozone to purify the water.

When the water quality is high enough, the ozone generator switches off and the disinfection process stops.

This type of intermittent management (of the on-off type), nevertheless, is affected by big problems tied to the fact that the ozone generator has to produce large concentrations of ozone when it is switched on and is therefore altogether very cumbersome and oversized with respect to the volume of treated water. The systems shown on documents US 2007/0090030 and US 2004/0168989, therefore, by also operating in oversize conditions, are considered very expensive and costly plants with high installation costs and far from negligible energy consumption levels.

Besides this, it must be added that for these systems as well, the production of excess quantities of ozone soon causes damage to a number of plant components, requiring frequent and costly replacement and maintenance jobs.

To this must be added that all known systems using ozone to purify water, due to excessive dosage or unexpected malfunctions, are in any case exposed to the risk that a part of the ozone in the water will be accidentally released into the environment, with the risk of intoxicating the persons in it.

The main object of the present invention is to provide an appliance for the treatment of water, particularly for humidification systems in air treatment units, water-sanitary circuits, swimming facilities and the like, that not only allows trapping the impurities in the water but also eliminating the presence of bacteria, viruses, spores or similar micro organisms, and which is particularly simple from a structural viewpoint but at the same time very effective and efficient to use.

Another object of the present invention is to be particularly cheap from an economic viewpoint, its being possible to manufacture it with particularly low total production costs as well as not requiring high costs in terms of installation, maintenance and energy consumption.

Not the least object of the present invention is that of being usable for the treatment of both water-sanitary circuits with water from an open system and of closed water-sanitary circuits, i.e., with water re-circulation.

Yet another object of the present invention is to safeguard the system components, thus ensuring they have a long and safe life span.

Another object of the present invention is to provide an appliance for the treatment of water, particularly for humidification systems in air treatment units, water-sanitary circuits, swimming facilities and the like that allows overcoming the mentioned drawbacks of the state of the art in the ambit of a simple, rational, easy and effective to use solution.

The above-mentioned objects are achieved by this appliance for the treatment of water, particularly for humidification systems in air treatment units, water-sanitary circuits, swimming facilities and the like, according to claim 1.

Other characteristics and advantages of the present invention will become more evident from the description of a preferred, but not sole, embodiment of an appliance for the treatment of water, particularly for humidification systems in air treatment units, water-sanitary circuits, swimming facilities and the like, illustrated purely as an example but not limited to the annexed drawings in which:

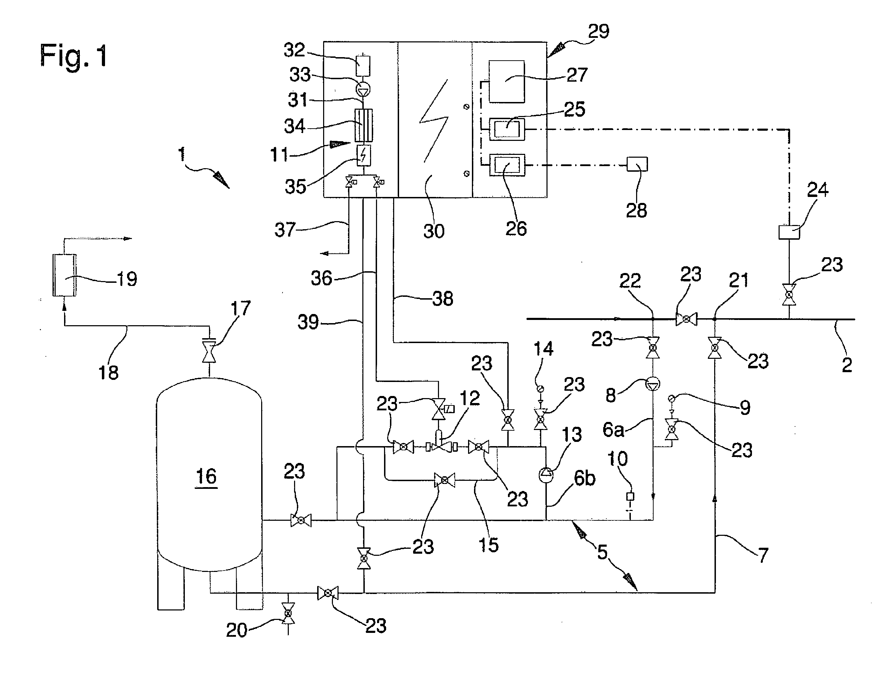

Figure 1 is an operating diagram of the appliance according to the invention;

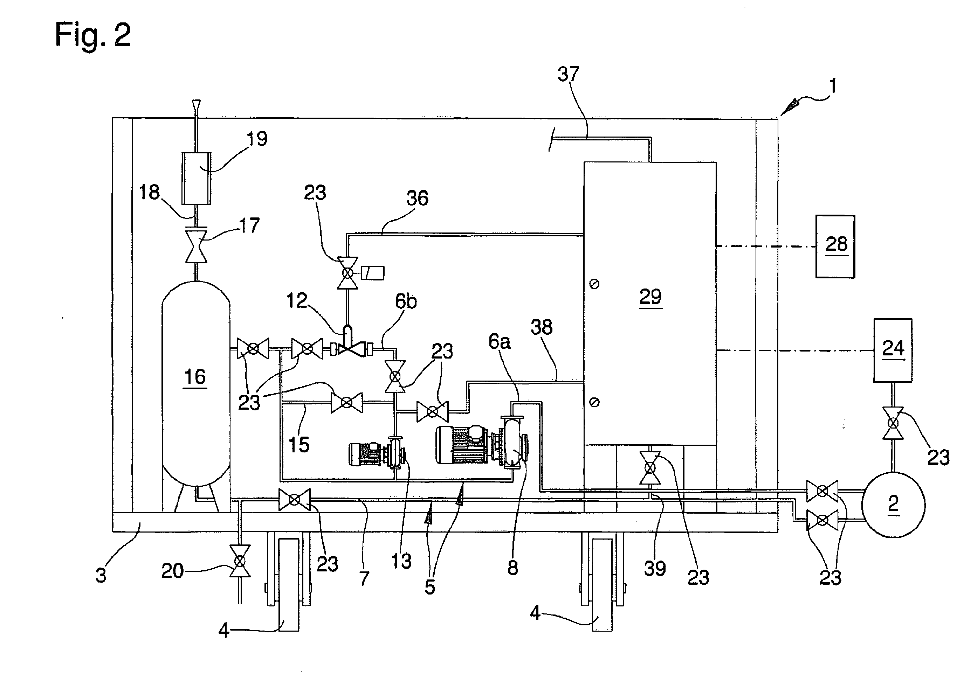

Figure 2 is a front, schematic and partial view of the appliance according to the invention;

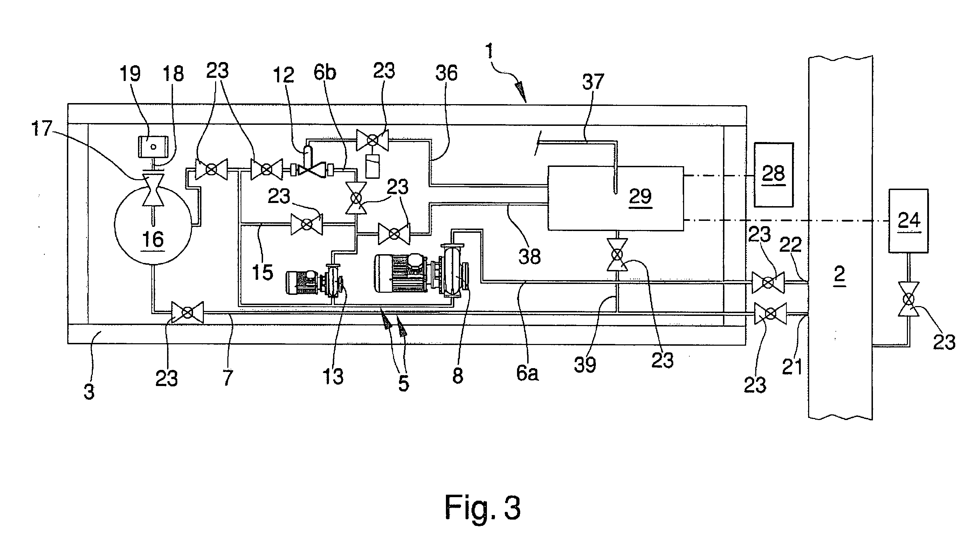

Figure 3 is a plan, schematic and partial view of the appliance according to the invention;

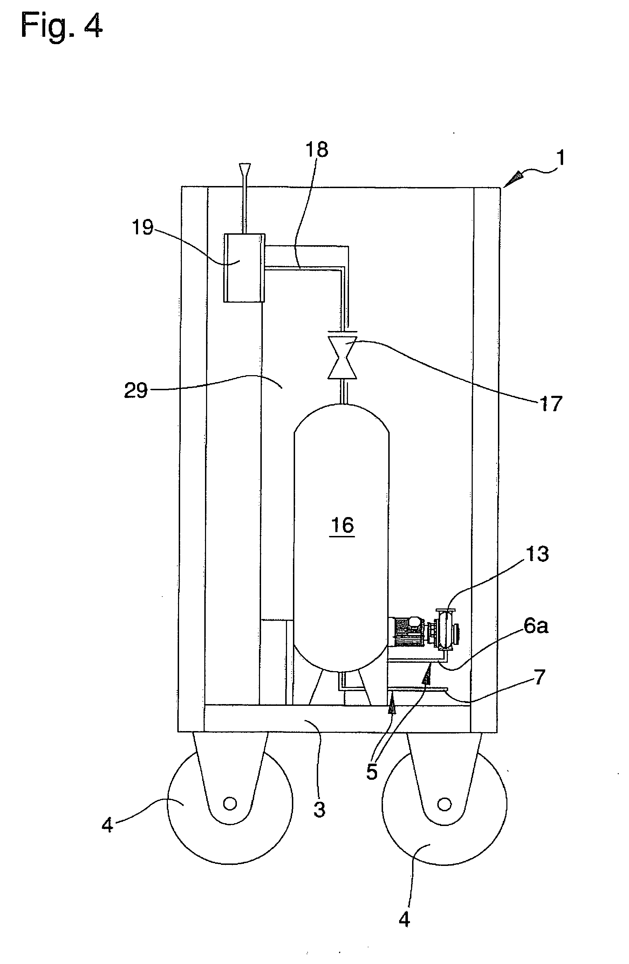

Figure 4 is a side, schematic and partial view of the appliance according to the invention.

With particular reference to such figures, globally indicated by 1 is an appliance for the treatment of water, particularly for humidification systems in air treatment units, water-sanitary circuits, swimming facilities and the like.

In the particular embodiment shown in the illustrations, the appliance 1 is designed to treat with ozone a generic water system 2, meaning by water system any type of pipe or duct in which water is made to circulate, both for open and closed circuits, and in the case of fixed and mobile installations, such as humidification systems for air treatment units or water-sanitary circuits of buildings, hospitals, offices, dwelling-houses, industrial environments, surgeries, kitchens, swimming facilities, public premises, small workshops, ships and public transport vehicles.

The appliance 1 is designed to be positioned in the technical compartment close to the filtration system, in the case of swimming facilities, or close to the air treatment units, in the case of humidification systems, and is designed to be hydraulically connected downstream of the circulation/recirculation pump of the water system 2 and electrically connected to the normal electricity mains.

The appliance 1 comprises a base frame 3, made of galvanised or stainless steel, which is mounted on wheels 4 for easier transport and movement on the ground and which is sized so as to house various component parts.

The base frame 3, in particular, supports a hydraulic circuit 5 associable with the water system 2 to be treated.

The hydraulic circuit 5 is split into a first branch 6a, 6b for taking the water to be treated from the water system 2 and into a second branch 7 for conveying the treated water to the water system 2.

For this purpose, along the first branch 6a, 6b are arranged main pumping means 8, made up, e.g., of a recirculation pump, which allows circulating the water throughout the hydraulic circuit 5, in order to take it from the water system 2 and return it once it has been treated.

The first branch 6a, 6b in turn is split into a main section 6a, along which is arranged the recirculation pump 8, a pressure gauge 9 and a flow meter 10, and into a secondary section 6b, mounted in parallel to the main section 6a.

The base frame 3 also supports ozone production means 11 suitable for transforming the molecular oxygen of the air into ozone, which is conveyed to an injection system 12 fitted along the first branch 6a, 6b of the hydraulic circuit 5, in particular along the secondary section 6b, to inject the ozone into the water to be treated.

The injection system 12 is made up, e.g., of a Venturi tube, designed to create a vacuum along the secondary section 6b to allow the suction of the ozone.

To achieve a correct circulation of the water along the secondary section 6b, serving the Venturi tube 12 are secondary pumping means 13, which consist, e.g., in a pressurization pump for pressurizing the injection system 12.

More in detail, the secondary section 6b is an offtake of the main section 6a, along which are fitted in succession the pressurization pump 13, a pressure gauge 14 and the Venturi tube 12, which can be eventually by-passed through a by-pass line 15.

In point of fact, the water to be treated that flows through the first branch 6a, 6b along the main section 6a is intended to be deviated along the secondary section 6b, where ozone injection occurs, before being again introduced along the main section 6a, through which it reaches a contact tank 16.

The contact tank 16 is placed between the first branch 6a, 6b and the second branch 7 of the hydraulic circuit 5 and is suitable for allowing the correct mixing of ozone in the water to be treated.

The contact tank 16 is made of a material chosen from the list comprising : stainless steel and fibreglass.

The contact tank 16 is sized to contain a quantity of water suitable for the treatment process of the water system 2 and is equipped with an entrance opening, for attachment to the main section 6a, an exit opening, for attachment to the second branch 7, and a breathing opening, for attachment to breathing means 17 suitable for ensuring the escape of the excess ozone not perfectly mixed in the water from the contact tank 16.

The breathing means 17 are composed, e,g., of a degasser valve mounted along a breathing line 18 at the top of the contact tank 16.

The breathing means 17 are associated with catalyst means 19, mounted along the breathing line 18 downstream of the degasser valve 17 and suitable for transforming the breathed ozone into oxygen, so as to prevent any ozone being released into the atmosphere.

Such catalyst means 19 are of the type selected from the list comprising: thermal type catalysts, active-charcoal catalysts.

The water treated with ozone inside the contact tank 16 is then sent to the water system 2 through the second branch 7, equipped with a drain tap 20.

The coupling point 21 of the second branch 7 on the water system 2 is located downstream with respect to the coupling point 22 of the first branch 6a, 6b, between the two coupling points 21, 22 the water system 2 being provided with a closing valve, or tap, 23 which allows completely deviating its water flow towards the hydraulic circuit 5 of the appliance 1.

In the same way, in the proximity of the above coupling points 21, 22 both the first branch 6a, 6b and the second branch 7 have two corresponding closing valves 23 which, if need be, allow cutting out and isolating the hydraulic circuit 5 with respect to the water system 2, to allow carrying out any maintenance jobs.

Other valves or solenoid valves 23 are distributed along the hydraulic circuit 5 to regulate the water flow inside it.

The appliance 1 also has water sensor means 24 suitable for detecting the presence of any bacterial load inside it.

The water sensor means 24 are of the type of one or more probes distributed along the hydraulic circuit downstream of the coupling points 21, 22.

The data read by the water sensor means 24 are processed by a processing and control unit 25, 26, 27, which is associated with the ozone production means 11 and with the water sensor means 24 and which is suitable for modulating the quantity of ozone to be injected according to the bacterial load present in the water.

In particular, the processing and control unit 25, 26, 27 is suitable for regulating the operation of the ozone production means 11 so as to produce a quantity of ozone substantially proportional to the bacterial load present in the water without substantially switching off the ozone production means 11. In other words, the production of ozone is split between:
- a maximum condition, wherein the ozone production means I 11 operate at top speed in the presence of large quantities of detected bacterial load, and
- a minimum condition, wherein the ozone production means 11 operate at low speed in the presence of small quantities of detected bacterial load.

The switch from maximum condition to minimum condition can occur in a continuous way, without skips; in this case, a continuous function is established which, starting with each bacterial load value detected by the water sensor means 24, allows obtaining, moment by moment, a corresponding value of the quantity of ozone to be produced to reduce the detected bacterial load.

Alternatively, the operation of the ozone production means I 11 can occur in a discreet way, i.e., by steps, amid a series of intermediate operating conditions which are distributed between the maximum condition and the minimum condition, and which correspond to a plurality of detected pre-established bacterial load intervals; in this case, the bacterial load detected moment by moment by the water sensor means 24 falls within one of the pre-established intervals, which in turn determines the intermediate operating condition for the ozone production means 11.

In any case, the processing and control unit 25, 26, 27 allows the perfect modulation of ozone production with respect to the increase or decrease of the presence of micro biological risk, for the purpose of deactivating bacteria, viruses and micro organisms or reducing their breeding both in open water processes and in closed recirculation circuits.

In point of fact, this allows producing a small and controlled quantity of ozone in a continuative way, avoiding overdosing conditions that would produce considerable drawbacks and problems, such as excessive energy consumption and physical damage to the components not resistant to the ozone.

In this respect, it is underlined that in conditions of normal operation inside the contact tank 16 an excessive quantity of ozone is never present, but only that required and enough to reduce the detected bacterial load.

Consequently, the degasser valve 18 practically always remains closed and the catalyst means 19 never come into contact with the ozone, except in occasional system malfunction conditions; this considerably extends the life of the degasser valve 18 and of the catalyst means 19, which in themselves do not offer great resistance to the ozone.

The same considerations can also be made for many other components present in the appliance 1 and/or in the water system 2.

At the same time, the production of a small and controlled quantity of ozone in a continuative way allows equipping the appliance I with a series of components with more compact dimensions, easier to install and manage, and having lower energy consumption.

Summing up, therefore, what seems a simple differentiation as regards the regulation of the ozone production means 11 is in fact the real innovation of the appliance I and allows:
- safeguarding all the components of the system not resistant to ozone;
- reducing to the utmost the use of costly and cumbersome catalyst systems, such as active-charcoal filters;
- reducing installation costs by 70%;
- reducing the overall dimensions of the appliance I by 60%;
- reducing energy costs by 80%.

Usefully, the water sensor means 24 are suitable for detecting not only the bacterial load but also the concentration of ozone in the water to act as feedback and consequently command the processing and control unit 25, 26, 27 to produce the desired quantity of ozone.

At the same time, the appliance 1 makes use of air sensor means 28 suitable for detecting the presence of harmful substances in the air.

The air sensor means 28, e.g., comprise one or more probes suitable for detecting any possible quantity of ozone released in the air.

In combination or as an alternative to the probes for detecting ozone in the air, the air sensor means 28 comprise one or more probes suitable for detecting substances such as chlorine or bacteria.

The probes 28 are distributed in the environments in the proximity of the water system which are frequented by people; in the case of a swimming facility, for example, such probes can be positioned in the area where the bathing pool is located.

Such air sensor means 28 are operatively associated with the processing and control unit 25, 26, 27, which is suitable, in case of danger, for emitting specific alarm signals to warm people of the risk under way and prevent them being exposed to harmful substances, thus averting the risk of by now ever more frequent intoxications.

Such particular feature of the appliance 1 allows guaranteeing the physical safety of people not only in case of system malfunction but also in the case of lack of maintenance, as well as in the case of the catalyst means 19 not having been periodically replaced.

The processing and control unit 25, 26, 27 is associated with a remote-control system, not shown in the illustrations, for the remote control of the alarm signals and of the operating parameters.

The processing and control unit 25, 26, 27 is also associated with display means, of the type of an electronic display or the like, which allows an operator to display the operating parameters of the processing and control unit 25, 26, 27. Usefully, the processing and control unit 25, 26, 27 is split into a water data control unit 25, interfaced with the water sensor means 24, an air data control unit 26, interfaced with the air sensor means 28, and a general unit 27, for managing and controlling the operating parameters, which is operatively associated both with the water data control unit 25 and the air data control unit 26.

The units 25, 26, 27 are integrated in a control panel made up of a general electric board 29 containing a power distribution section 30, the processing and control unit 25, 26, 27 and the ozone production means 11.

Advantageously the ozone production means 11 comprises an air suction duct 31 along which are arranged in series :
- air filtering means 32, of the type of a mechanical filter ;
- air movement means 33, of the type of a compressor/aspirator.

The presence of an air compressor enables the appliance 1 to produce ozone and to introduce it in gaseous phase inside any water storage containers, not shown in the illustrations;
- concentration means 34 of the oxygen present in the air;
- air drying means, if necessary integrated in the concentration means 34 or in the air filtering means 32;
- a corona-discharge system 35 suitable for the actual production of the ozone starting with the air coming from the concentration means 34 and directly controlled by the power distribution section 30 and controlled by the processing and control unit 25, 26, 27.

From the corona-discharge system 35, the produced ozone is conveyed to a link line 36 with the Venturi tube 12 and to a distribution line 37 for any injection into the water storage containers.

For the correct operation of the corona-discharge system 35 a hydraulic cooling line 38, 39, is provided suitable for taking the water from the hydraulic circuit 5 for cooling the corona-discharge system 35.

The hydraulic cooling line 38, 39 consists of an inlet duct 38, connected to the secondary section 6b, for taking the cooling water, and of an outlet duct 39 connected to the second branch 7 for draining off the water after cooling.

The present invention operates as follows.

During the treatment stage, the water of the water system 2 is made to partially or totally flow into the hydraulic circuit 5 and is enriched with ozone through the Venturi tube 12.

The water enriched with ozone remains inside the contact tank 16 for the time needed for the ozone to mix with the water.

This way, the ozone has the time necessary to aggregate and stabilise in the water, immediately starting to deactivate bacteria and viruses thanks to its oxidising power.

In this stage, the contact tank 16 ensures a perfect mix without putting the ozone in contact with other components of the system, as instead occurs in some swimming facilities of known type.

Furthermore, by means of the degasser valve 17, the ozone not perfectly mixed with the water can be conveyed through the breathing line 18 and catalysed, i.e., converted into oxygen, through the catalyst means 19.

Consequently, outside the contact tank 16 and the hydraulic circuit 5 only oxygen will come out and not ozone, making the appliance I extremely safe and completely environment friendly.

During operation, the ozone production means 11 are supplied by the power distribution section 30 and modulated by the processing and control unit 25, 26, 27 according to the data read by the water sensor means 24.

This system allows producing the quantity of ozone according to the water quality parameters and, more precisely, in the presence of bacteria, viruses and organic load, in such a way that the more microbiological risks there are, the more the system will modulate for a greater production of ozone and vice versa. Furthermore, the processing and control unit 25, 26, 27 is set to analyse and consider the data coming from the air sensor means 28, for the purpose of stopping the operation of the appliance I in the event of any faults and promptly notifying whatever found.

Finally, by means of the distribution line 37 the appliance 1 can convey the ozone directly inside water storage containers outside the hydraulic circuit 5, if provided in the water system 2.

It has been ascertained how the described invention achieves the proposed objects.

In this respect, it is underlined that the particular solution of using ozone to treat water is particularly convenient inasmuch as ozone is the most powerful natural oxidiser for the treatment of water.

Such substance has the capacity to destroy algae, bacteria, deactivate viruses, oxidise organic substances and organic contaminants which are especially present in aqueous solutions.

By means of the appliance according to the invention, the following objectives can therefore be achieved: bacterial disinfection; viral deactivation; Iron, soluble

Manganese and organic and inorganic compound oxidisation; colour removal; elimination of smells and flavours; removal of algae; microflocculation of dissolved organics.

It should also be noted that the present appliance permits reducing microbiological risk in water-sanitary circuits in a way fully respectful of the environment and of human health, reducing the use of hazardous substances such as chlorine.

Compared to traditional chlorine-based disinfection systems, the present invention permits attaining the following advantages:
- ozone, concentrations being equal, is about 3000 times more active than chlorine in destroying bacteria and viruses;
- ozone is an excellent deodorising agent which permits eliminating smells, hydrogen sulphide and urine;
- ozone is particularly effective in its action against mildews, mouldiness and fungi;
- chlorine is a toxic gas while ozone is indicated as toxic by the American EPA (Environment Protection Agency) only in concentrations above 1.0 mg/l, and in any case no deaths have ever been recorded as being caused by it in such concentration;
- chlorine gas is stored in pressurised containers which have already been the cause of accidents on several occasions;
- chlorine alters the pH values while ozone tends to stabilise such values;
- active chlorine in water, in the presence of urine and exudations, forms chloramines which can irritate the skin and eyes and, in the presence of organic substances, forms carcinogenic substances such as trihalomethanes;
- thanks to the high efficiency in the flocculation and in the increase in the effectiveness in filtration, the water of swimming pools treated with the present appliance is particularly clear and tends towards sky blue colour;
- the ozone produced by means of the present appliance decomposes in oxygen, without any environmental pollution. Chlorine, on the other hand, tends to build up in the atmosphere and pollute the air, and this causes numerous cases of asthma in the children who frequent indoor swimming pools. A reduction of free chlorine in the pool reduces the concentration in the air and consequently makes the environment less invasive with respect to more sensitive elements;
- with an 80% reduction of the chlorine they contain, the filter washing and renewal waters comply with Applicable Standards relating to wastewaters (max 0.02 ppm).

## Claims

1. Appliance (1) for the treatment of water of a water system (2) which is in proximity of environments frequented by people, particularly humidification systems in air treatment units, water-sanitary circuits, swimming facilities and the like, comprising a base frame (3) supporting:
- at least a hydraulic circuit (5) associable with said water system (2) to be treated, comprising at least a first branch (6a, 6b) for taking the water to be treated from said water system (2) and at least a second branch (7) for conveying the treated water to said water system (2);
- ozone production means (11) suitable for transforming the molecular oxygen of the air into ozone,
- at least an injection system (12) for injecting said ozone into said first branch (6a, 6b) of the hydraulic circuit (5),
- at least a contact tank (16) placed between said first branch (6a, 6b) and said second branch (7) of the hydraulic circuit (5) suitable for allowing the mixing of said ozone in said water, and
- breathing means (17) of said ozone from said contact tank (16) associated with catalyst means (19) suitable for transforming the breathed ozone into oxygen,
**characterised by** the fact that it comprises:
- water sensor means (24) suitable for detecting the presence of bacterial load in said water;
- at least one processing and control unit (25, 26, 27) which is associated with said ozone production means (11) and with said water sensor means (24) and is suitable for regulating the operation of said ozone production means (11) for the purpose of producing a quantity of ozone substantially proportional to the bacterial load present in said water without substantially switching off said ozone production means (11); and
- air sensor means (28), associated with said processing and control unit (25, 26, 27), and comprising one or more probes suitable for detecting any possible quantity of ozone released in the air, said probes being distributed in the environments in proximity of the water system (2), and the processing and control unit (25, 26, 27) being suitable, in case of danger, for emitting specific alarm signals to warn people, and being set to analyse and consider the data coming from said air sensor means (28), for the purpose of stopping the operation of the appliance (1) in the event of faults and notifying what found.

2. Appliance (1) according to the claim 1, **characterised by** the fact that said breathing means (17) are associated with the top of said contact tank (16).

3. Appliance (1) according to one or more of the preceding claims, **characterised by** the fact that said catalyst means (19) are of the type chosen from the list comprising: thermal type catalysts, active-charcoal catalysts.

4. Appliance (1) according to one or more of the preceding claims, **characterised by** the fact that said injection system (12) comprises at least a Venturi tube.

5. Appliance (1) according to one or more of the preceding claims, **characterised by** the fact that it comprises main pumping means (8) associated with said hydraulic circuit (5) for the circulation of said water in said hydraulic circuit (5).

6. Appliance (1) according to one or more of the preceding claims, **characterised by** the fact that it comprises secondary pumping means (13) associated with said first branch (6a, 6b) of the hydraulic circuit (5) for the pressurization of said injection system (12).

7. Appliance (1) according to one or more of the preceding claims, **characterised by** the fact that said ozone production means (11) comprise air filtering means (32).

8. Appliance (1) according to one or more of the preceding claims, **characterised by** the fact that said ozone production means (11) comprise air movement means (33).

9. Appliance (1) according to one or more of the preceding claims, **characterised by** the fact that said ozone production means (11) comprise concentration means (34) of the oxygen present in the air.

10. Appliance (1) according to one or more of the preceding claims, **characterised by** the fact that said ozone production means (11) comprise air drying means.

11. Appliance (1) according to one or more of the preceding claims, **characterised by** the fact that said ozone production means (11) comprise at least a corona-discharge system (35).

12. Appliance (1) according to one or more of the preceding claims, **characterised by** the fact that it comprises a general electric board containing said ozone production means (11) and said processing and control unit (25, 26, 27).

13. Appliance (1) according to one or more of the preceding claims, **characterised by** the fact that it comprises at least a hydraulic cooling line (38, 39) suitable for taking said water from said hydraulic circuit (5) for cooling said ozone production means (11).

14. Appliance (1) according to one or more of the preceding claims, **characterised by** the fact that said water sensor means (24) are suitable for detecting the concentration of ozone in said water and for commanding said processing and control unit (25, 26, 27) consequently.

15. Appliance (1) according to one or more of the preceding claims, **characterised by** the fact that said processing and control unit (25, 26, 27) is associated with at least a remote-control system for the remote control of the alarm signals and of the operating parameters.

16. Appliance (1) according to one or more of the preceding claims, **characterised by** the fact that it comprises display means for displaying the operating parameters of said processing and control unit (25, 26, 27).

## Patentansprüche

1. Vorrichtung (1) für die Behandlung von Wasser eines Wassersystems (2), welches sich in der Nähe von Umgebungen befindet, die von Menschen frequentiert sind, insbesondere Befeuchtungssysteme in Luftaufbereitungseinheiten, Brauchwasserkreisläufen, Schwimmanlagen und dergleichen, mit einem Grundrahmen (3), welches trägt:
- wenigstens einen Hydraulikkreis (5), der mit dem zu behandelnden Wassersystem (2) verbunden werden kann, mit wenigstens einem Abzweig (6a, 6b) zum Entnehmen des zu behandelnden Wassers aus dem Wassersystem (2) und wenigstens einem zweiten Abzweig (7) zum Befördern des behandelten Wassers zum Wassersystem (2);
- eine Ozon-Produktionseinrichtung (11), die zum Umwandeln des molekularen Sauerstoffs der Luft in Ozon geeignet ist,
- wenigstens ein Injektionssystem (12) zum injizieren des Ozons in den ersten Abzweig (6a, 6b) des Hydraulikkreises (5),
- wenigstens einen Kontaktbehälter (16), der zwischen dem ersten Abzweig (6a, 6b) und dem zweiten Abzweig (7) des Hydraulikkreises (5) angeordnet ist und zum Einmischen des Ozons in das Wasser geeignet ist, und
- eine Auslasseinrichtung (17) für das Ozon aus dem Kontaktbehälter (16), die mit einer zum Umwandeln des ausgelassenen Ozons in Sauerstoff geeigneten Katalysatoreinrichtung (19) verbunden ist,
**dadurch gekennzeichnet, dass** diese umfasst:
- eine Wasser-Sensoreinrichtung (24), die zum Erfassen des Vorhandenseins einer bakteriellen Last im Wasser geeignet ist;
- wenigstens einer Verarbeitungs- und Steuereinheit (24, 26, 27), welche mit der Ozon-Produktionseinrichtung (11) und mit der Wasser-Sensoreinrichtung (24) verbunden ist und zum Regulieren des Betriebs der Ozon-Produktionseinrichtung (11) zum Zwecke der Produktion einer Ozonmenge geeignet ist, die im Wesentlichen proportional zu der in dem Wasser vorhandenen bakteriellen Last ist, ohne die Ozon-Produktionseinrichtung (11) im Wesentlichen auszuschalten; und
- eine Luft-Sensoreinrichtung (28), die mit der Verarbeitungs- und Steuereinheit (25, 26, 27) verbunden ist und ein oder mehrere Messfühler umfasst, die zum Erfassen einer in der Luft gelösten möglichen Ozonmenge geeignet sind, wobei die Messfühler in den Umgebungen in der Nähe des Wassersystems (2) verteilt sind und die Verarbeitungs- und Steuereinheit (25, 26, 27) im Gefährdungsfall in der Lage ist, spezifische Alarmsignale auszugeben, um Menschen zu warnen, und so eingestellt ist, die von der Luft-Sensoreinrichtung (28) kommenden Daten zu analysieren und zu berücksichtigen, um den Betrieb der Vorrichtung (1) im Falle von Fehlern zu stoppen und mitzuteilen, was gefunden wurde.

2. Vorrichtung (1) nach Anspruch 1, **dadurch gekennzeichnet, dass** die Auslasseinrichtung (17) mit der Oberseite des Kontaktbehälters (16) verbunden ist.

3. Vorrichtung (1) nach ein oder mehreren der vorstehenden Ansprüche, **dadurch gekennzeichnet, dass** die Katalysatoreinrichtung (90) von der Art ist, ausgewählt aus der Liste umfassend: thermische Katalysatoren, Aktivkohle-Katalysatoren.

4. Vorrichtung (1) nach ein oder mehreren der vorstehenden Ansprüche, **dadurch gekennzeichnet, dass** das Injektionssystem (12) wenigstens ein Venturi-Rohr umfasst.

5. Vorrichtung (1) nach ein oder mehreren der vorstehenden Ansprüche, **dadurch gekennzeichnet, dass** diese eine Haupt-Pumpeinrichtung (8) umfasst, die mit dem Hydraulikkreis (5) zur Zirkulation des Wassers in dem Hydraulikkreis (5) verbunden ist.

6. Vorrichtung (1) nach ein oder mehreren der vorstehenden Ansprüche, **dadurch gekennzeichnet, dass** diese eine zweite Pumpeinrichtung (13) umfasst, die mit dem ersten Abzweig (6a, 6b) des Hydraulikkreises (5) für die Druckbeaufschlagung des Injektionssystems (12) verbunden ist.

7. Vorrichtung (1) nach ein oder mehreren der vorstehenden Ansprüche, **dadurch gekennzeichnet, dass** die Ozon-Produktionseinrichtung (11) eine Luft-Filtereinrichtung (32) umfasst.

8. Vorrichtung (1) nach ein oder mehreren der vorstehenden Ansprüche, **dadurch gekennzeichnet, dass** die Ozon-Produktionseinrichtung (11) eine Luft-Bewegungseinrichtung (33) umfasst.

9. Vorrichtung (1) nach ein oder mehreren der vorstehenden Ansprüche, **dadurch gekennzeichnet, dass** die Ozon-Produktionseinrichtung (11) eine Konzentrationseinrichtung (34) für den in der Luft vorhandenen Sauerstoff umfasst.

10. Vorrichtung (1) nach ein oder mehreren der vorstehenden Ansprüche, **dadurch gekennzeichnet, dass** die Ozon-Produktionseinrichtung (11) eine Luft-Trocknungseinrichtung umfasst.

11. Vorrichtung (1) nach ein oder mehreren der vorstehenden Ansprüche, **dadurch gekennzeichnet, dass** die Ozon-Produktionseinrichtung (11) wenigstens ein Corona-Entladesystem (35) umfasst.

12. Vorrichtung (1) nach ein oder mehreren der vorstehenden Ansprüche, **dadurch gekennzeichnet, dass** diese eine generelle elektrische Platte umfasst,
welche die Ozon-Produktionseinrichtung (11) und die Verarbeitungs- und Steuereinheit (25, 26, 27) enthält.

13. Vorrichtung (1) nach ein oder mehreren der vorstehenden Ansprüche, **dadurch gekennzeichnet, dass** diese wenigstens eine Hydraulik-Kühlleitung (38, 39) umfasst, die zur Entnahme des Wassers aus dem Hydraulikkreis (5) zum Kühlen der Ozon-Produktionseinrichtung (11) geeignet ist.

14. Vorrichtung (1) nach ein oder mehreren der vorstehenden Ansprüche, **dadurch gekennzeichnet, dass** die Wasser-Sensoreinrichtung (24) zum Erfassen der Konzentration von Ozon im Wasser und zum entsprechenden anweisen der Verarbeitungs- und Steuereinheit (25, 26, 27) geeignet ist.

15. Vorrichtung (1) nach ein oder mehreren der vorstehenden Ansprüche, **dadurch gekennzeichnet, dass** die Verarbeitungs- und Steuereinheit (25, 26, 27) mit wenigstens einem Fernsteuersystem zur Fernsteuenmg der Alarmsignale und der Betriebsparameter verbunden ist.

16. Vorrichtung (1) nach ein oder mehreren der vorstehenden Ansprüche, **dadurch gekennzeichnet, dass** diese eine Anzeigeeinrichtung zum Anzeigen der Betriebsparameter der Verarbeitungs- und Steuereinheit (25, 26, 27) umfasst.

## Revendications

1. Appareil (1) pour le traitement de l'eau d'un circuit d'eau (2) qui est à proximité d'environnements fréquentés par un public, notamment des systèmes d'humidification dans des unités de traitement de l'air, des circuits hydrauliques sanitaires, des équipements pour la natation, et analogues, comprenant une armature de base (3) pour le support de :
- au moins un circuit hydraulique (5) pouvant être associé audit circuit d'eau (2) qui doit être traité, comprenant au moins une première branche (6a, 6b) pour extraire l'eau qui doit être traitée dudit circuit d'eau (2) et au moins une deuxième branche (7) pour transporter l'eau traitée jusqu'audit circuit d'eau (2),
- des moyens de production d'ozone (11) aptes à transformer l'oxygène moléculaire de l'air en ozone,
- au moins un système d'injection (12) pour injecter ledit ozone dans ladite première branche (6a, 6b) du circuit hydraulique (5),
- au moins un réservoir de contact (16) situé entre ladite première branche (6a, 6b) et ladite deuxième branche (7) du circuit hydraulique (5), apte à permettre le mélange dudit ozone dans ladite eau, et
- des moyens d'absorption (17) dudit ozone provenant dudit réservoir de contact (16), associés à des moyens de catalyse (19) aptes à transformer l'ozone absorbé en oxygène,
**caractérisé par le fait qu'**il comprend :
- des moyens capteurs d'eau (24) aptes à détecter la présence d'une charge bactérienne dans ladite eau ;
- au moins une unité de traitement et de commande (25, 26, 27) qui est associée auxdits moyens de production d'ozone (11) et auxdits moyens capteurs d'eau (24) et qui est apte à réguler le fonctionnement desdits moyens de production d'ozone (11) en vue de la production d'une quantité d'ozone sensiblement proportionnelle à la charge bactérienne présente dans ladite eau sans pratiquement désactiver lesdits moyens de production d'ozone (11) ; et
- des moyens capteurs d'air (28), associés à ladite unité de traitement et de commande (25, 26, 27) et comprenant une ou plusieurs sondes aptes à détecter une possible quelconque quantité d'ozone libérée dans l'air, lesdites sondes étant répartis dans les environnements qui sont à proximité du circuit d'eau (2), et ladite unité de traitement et de commande (25, 26, 27) étant apte, en cas de danger, à émettre des signaux d'alarme spécifiques pour avertir le public, et étant réglée pour analyser et prendre en compte les données provenant desdits moyens capteurs d'air (28) en vue de l'arrêt du fonctionnement de l'appareil (1) dans l'éventualité de défaillances, et pour notifier ce qui a été constaté.

2. Appareil (1) selon la revendication 1, **caractérisé par le fait que** lesdits moyens d'absorption (17) sont associés à la partie supérieure dudit réservoir de contact (16).

3. Appareil (1) selon une ou plusieurs des revendications précédentes, **caractérisé par le fait que** lesdits moyens de catalyse (19) sont du type choisi dans la liste comprenant : des catalyseurs de type thermique, des catalyseurs à charbon de bois actif.

4. Appareil (1) selon une ou plusieurs des revendications précédentes, **caractérisé par le fait que** ledit système d'injection (12) comprend au moins un tube de Venturi.

5. Appareil (1) selon une ou plusieurs des revendications précédentes, **caractérisé par le fait qu'**il comprend des moyens de pompage principaux (8) associés audit circuit hydraulique (5) pour la circulation de ladite eau dans ledit circuit hydraulique (5).

6. Appareil (1) selon une ou plusieurs des revendications précédentes, **caractérisé par le fait qu'**il comprend des moyens de pompage secondaires (13) associés à ladite première branche (6a, 6b) du circuit hydraulique (5) pour la pressurisation dudit système d'injection (12).

7. Appareil (1) selon une ou plusieurs des revendications précédentes, **caractérisé par le fait que** lesdits moyens de production d'ozone (11) comprennent des moyens de filtrage d'air (32).

8. Appareil (1) selon une ou plusieurs des revendications précédentes, **caractérisé par le fait que** lesdits moyens de production d'ozone (11) comprennent des moyens de déplacement d'air (33).

9. Appareil (1) selon une ou plusieurs des revendications précédentes, **caractérisé par le fait que** lesdits moyens de production d'ozone (11) comprennent des moyens (34) de concentration de l'oxygène présent dans l'air.

10. Appareil (1) selon une ou plusieurs des revendications précédentes, **caractérisé par le fait que** lesdits moyens de production d'ozone (11) comprennent des moyens de séchage d'air.

11. Appareil (1) selon une ou plusieurs des revendications précédentes, **caractérisé par le fait que** lesdits moyens de production d'ozone (11) comprennent au moins un système de décharge par effet couronne (35).

12. Appareil (1) selon une ou plusieurs des revendications précédentes, **caractérisé par le fait qu'**il comprend un tableau électrique général contenant lesdits moyens de production d'ozone (11) et ladite unité de traitement et de commande (25, 26, 27).

13. Appareil (1) selon une ou plusieurs des revendications précédentes, **caractérisé par le fait qu'**il comprend au moins une conduite hydraulique de refroidissement (38, 39) apte à extraire ladite eau dudit circuit hydraulique (5) pour le refroidissement desdits moyens de production d'ozone (11).

14. Appareil (1) selon une ou plusieurs des revendications précédentes, **caractérisé par le fait que** lesdits moyens capteurs d'eau (24) sont aptes à détecter la concentration d'ozone dans ladite eau et à commander en conséquence ladite unité de traitement et de commande (25, 26, 27).

15. Appareil (1) selon une ou plusieurs des revendications précédentes, **caractérisé par le fait que** ladite unité de traitement et de commande (25, 26, 27) est associée à au moins un système de télécommande pour la télécommande des signaux d'alarme et des paramètres de fonctionnement.

16. Appareil (1) selon une ou plusieurs des revendications précédentes, **caractérisé par le fait qu'**il comprend des moyens d'affichage pour afficher les paramètres de fonctionnement de ladite unité de traitement et de commande (25, 26, 27).
